# EUROPÄISCHE PATENTSCHRIFT

(11) **EP 0 388 700 B1**
(45) Veröffentlichungstag und Bekanntmachung des Hinweises auf die Patenterteilung: **22.12.1993**
(21) Anmeldenummer: 90104208.5
(22) Anmeldetag: 05.03.1990
(51) Int. Cl.: H04L 9/32, G07F 7/10

(54) **Verfahren zur Generierung einer Zufallszahl für die verschlüsselte Übertragung von Daten**
Method for generating a random cipher for the cryptographic transmission of data
Procédé pour générer un chiffre aléatoire pour la transmission cryptographique de données

(30) Priorität: 08.03.1989 DE 3907527
(43) Veröffentlichungstag der Anmeldung: 26.09.1990
(73) Patentinhaber: Siemens Nixdorf Informationssysteme Aktiengesellschaft, 33102 Paderborn (DE)
(72) Erfinder: Kruse, Dietrich, D-8012 Ottobrunn (DE)
(74) Vertreter: Fuchs, Franz-Josef, Dr.-Ing.

(56) Entgegenhaltungen:
- EP-A- 0 250 309
- EP-A- 0 281 057
- GB-A- 2 144 546

## Beschreibung

Die Erfindung betrifft ein Verfahren zur Generierung einer Zufallszahl für die verschlüsselte Übertragung von Daten gemäß den Merkmalen des Oberbegriffs des Anspruchs 1.

In modernen Datenverarbeitungs- und Kommunikationssystemen spielt der Schutz der Daten eine immer wichtigere Rolle. Die Qualität eines Systems in bezug auf einen ausreichenden Datenschutz hängt dabei entscheidend davon ab, inwieweit es gelingt, daß der Zugriff zum System nur für berechtigte Personen möglich ist und umgekehrt nichtberechtigte Personen mit aboluter Sicherheit ausgesperrt bleiben. Eine einfache, wenn auch nicht asolut sichere Möglichkeit zur Überprüfung der Zugangsberechtigung zu einem System sind zum Beispiel sogenannte Paßwörter, die nur dem berechtigten Benutzer bekannt sind und die vom Benutzer beliebig oft geändert werden können. Da bei Paßwörtern die Gefahr besteht, daß sie von Unbefugten ausgespäht oder abgehört werden können, sind zusätzliche Sicherungsmaßnahmen unverzichtbar. Eine dieser Maßnahmen ist zum Beispiel die Ver- und Entschlüsselung der übertragenen Information, eine Maßnahme, die bei Datenverarbeitungssystemen unter anderem auch mit Hilfe der Chipkarte realisierbar ist.

Mit der zunehmenden Einbeziehung der Chipkarte in Kommunikationssysteme entsteht andererseits wieder ein zusätzliches Sicherheitsrisiko, weil Chipkarten relativ leicht verlorengehen können. Es muß deshalb unbedingt dafür gesorgt werden, daß die Chipkarte bei Verlust in jedem Fall vor einem eventuellen Mißbrauch geschützt ist. Die Chipkarte ist deshalb so konzipiert, daß auf die in einer gesicherten Chipkarte gespeicherten Daten nur dann zugegriffen werden kann, wenn vom Benutzer vorab ein nur in der Chipkarte abgespeicherter Identifikator, beispielsweise eine persönliche Identifikationsnummer, die sogenannte PIN, eingegeben wird.

Eine weitere Sicherheitsbarriere kann mit Hilfe der Authentifikation der Chipkarte zum System aufgebaut werden. Diese Authentifikation verhindert, daß ein beliebiger Teilnehmer durch die Vorgabe, befugt zu sein, an geheime Informationen im System gelangen kann. Eine wesentliche Voraussetzung für die Authentifikation ist ein persönliches, nicht kopierbares Merkmal des Teilnehmers. Dieses nicht kopierbare Merkmal des Teilnehmers wird mit Hilfe eines geheimen Schlüssels für die Ver- und Entschlüsselung erreicht, der den beiden Partnern, das heißt einerseits der Chipkarte und andererseits dem System, und zwar nur diesen beiden Partnern bekannt ist. Die Sicherheit kann zusätzlich noch dadurch erhöht werden, daß in der Chipkarte unter Einbeziehung dieses geheimen Schlüssels eine Zufallszahl generiert wird, die von der Chipkarte an das System übertragen wird (vgl. hierzu auch EP-A-0 281 057). Es wäre an sich denkbar, diese Zufallszahlen programmtechnisch zu erzeugen. Nach Ansicht von Sicherheitsexperten sind derart erzeugte Zufallszahlen aber nicht zufällig genug und damit letztlich nicht sicher genug.

Es ist deshalb bereits bekannt, die "Zufälligkeit" einer Zufallszahl dadurch zu erhöhen, daß man die Generierung der Zufallszahl von einem variablen Startwert abhängig macht oder noch besser, daß man diesen variablen Startwert mit einer bereits vorher generierten Zufallszahl modifiziert.

Der vorliegenden Erfindung liegt nun die Aufgabe zugrunde, für die Erzeugung eines modifizierten Startwertes eine möglichst einfache und insbesondere für die Anwendung in Chipkarten gut geeignete Methode anzugeben.

Die Lösung dieser Aufgabe ergibt sich erfindungsgemäß durch die kennzeichnenden Merkmale des Anspruchs 1.

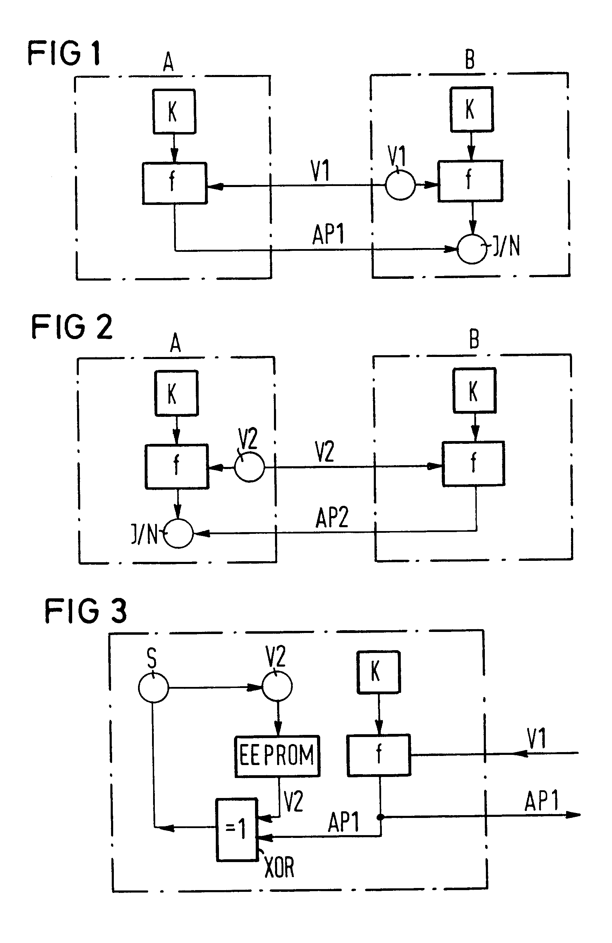

Das erfindungsgemäße Verfahren wird im folgenden anhand der Zeichnung näher erläutert. Ausgangspunkt des Verfahrens ist die gegenseitige Authentifikation zweier Teilnehmer A, B nach der sogenannten "Challenge Response"-Methode, wie sie in den FIG 1 und 2 dargestellt ist. Hierbei wird zum Beispiel zunächst vom Teilnehmer B eine Zufallszahl v1 an den Teilnehmer A geschickt, der die Zufallszahl v1 mit Hilfe eines Schlüssels K und eines Chiffrieralgorithmus f verschlüsselt und das Ergebnis als Autorisierungsparameter AP1 an den Teilnehmer B zurücksendet. Der Teilnehmer B vollzieht den gleichen Vorgang und erhält ebenfalls diesen Autorisierungsparameter AP1. Durch Vergleich der beiden Autorisierungsparameter kann schließlich der Teilnehmer B feststellen, ob er tatsächlich mit dem Teilnehmer A kommuniziert. Damit auch der Teilnehmer A sichergeht, daß er mit dem Teilnehmer B kommuniziert, wird dieser Vorgang in entgegengesetzter Richtung mit der Zufallszahl v2 und dem Autorisierungsparameter AP2 durchgeführt (siehe FIG 2).

Diese wechselseitig übertragenen Autorisierungsparameter AP1, AP2 werden nun, wie FIG 3 zeigt, in vorteilhafter Weise für die Generierung eines variablen Startwertes für eine neue Zufallszahl verwendet. Dabei wird z.B. der beim Teilnehmer A aus der vom Teilnehmer B übertragenen Zufallszahl v1, dem Schlüssel K und dem Chiffrieralgorithmus f generierte Autorisierungsparameter AP1 mit der beim Teilnehmer A bei der vorhergehenden Autorisierung verwendeten und zwischengespeicherten Zufallszahl v2 mit Hilfe eines Exclusiv-ODER-Gliedes XOR zur Bildung eines neuen Startwertes s miteinander verknüpft. Dieser modifizierte Startwert s wird bei der anschließenden Generierung einer neuen Zufallszahl v2 benutzt, die ihrerseits wieder zwischengespeichert und an den Teilnehmer B übertragen wird. Analog verläuft die Generierung eines modifizierten Startwertes beim Teilnehmer B.

## Patentansprüche

1. Verfahren zur Generierung einer Zufallszahl für die verschlüsselte Übertragung von Daten in einem mit Prozessor-Chipkarten arbeitenden Datenaustauschsystem, unten Verwendung eines als Eingangsgröße für einen Zufallszahlengenerator vorgesehenen, durch Verknüpfung mit einer zuletzt gespeicherten Zufallszahl gebildeten variablen Startwertes,
**dadurch gekennzeichnet,** daß, ausgehend von einer wechselseitigen Authentifikation jeweils zweier Teilnehmer (A, B), bei der mit Hilfe eines geheimen Schlüssels (K) und eines implementierten Chiffrieralgorithmus (f) in Abhängigkeit von einer vom jeweils anderen Teilnehmer übertragenen Zufallszahl (v1, v2) ein Autorisierungsparameter (AP1, AP2) gebildet und zu Prüfzwecken zum anderen Teilnehmer übertragen wird, durch logische Verknüpfung dieses Autorisierungsparameters mit der beim Teilnehmer zuletzt erzeugten und gespeicherten alten Zufallszahl ein neuer Startwert für den eigenen Zufallszahlengenerator gebildet wird, dessen neue Zufallszahl sowohl gespeichert als auch an den jeweils anderen Teilnehmer übertragen wird.

2. Verfahren nach Anspruch 1,
**dadurch gekennzeichnet,** daß der Autorisierungsparameter mit der alten Zufallszahl über ein Exclusiv-ODER-Glied (XOR) verknüpft wird.

## Claims

1. Method for generating a random number for the cryptographic transmission of data in a data exchange system using processor chip cards, employing a variable starting value provided as the input value for a random number generator and formed by logical combination with a last stored random number, characterized in that, proceeding from a mutual authentification of two subscribers (A, B) in each case, in which an authorization parameter (AP1, AP2) is formed with the aid of a secret cipher (K) and an implemented ciphering algorithm (f) depending on a random number (v1, v2) transmitted by the respective other subscriber and is transmitted to the other subscriber for verification purposes, a new starting value for the one subscriber's own random number generator is formed by logical combination of said authorization parameter with the previous random number last generated and stored at the subscriber, the new random number of said random number generator being both stored and transmitted to the respective other subscriber.

2. Method according to Claim 1, characterized in that the authorization parameter is logically combined with the previous random number by means of an exclusive-OR element (XOR).

## Revendications

1. Procédé pour produire un nombre aléatoire pour la transmission codée de données dans un système d'échange de données qui opère avec une carte à puce à processeur, moyennant l'utilisation d'une valeur de départ variable, qui est prévue en tant que grandeur d'entrée pour le générateur du nombre aléatoire et qui est formée par combinaison avec un nombre aléatoire mémorisé en dernier lieu, caractérisé par le fait qu'à partir d'une authentification réciproque de respectivement deux abonnés (A,B), lors de laquelle un paramètre d'autorisation (AP1,AP2) est formé à l'aide d'un code secret (K) et d'un algorithme de chiffrage mis en oeuvre (f) en fonction d'un nombre aléatoire (v1,v2) transmis par l'autre abonné respectif et est transmis à des fins de contrôle à l'autre abonné, une nouvelle valeur de départ pour le générateur proprement-dit du nombre aléatoire, dont le nouveau nombre aléatoire est aussi mémorisé et également transmis à l'autre abonné respectif, est formée grâce à la combinaison logique de ce paramètre d'autorisation avec l'ancien nombre aléatoire produit en dernier lieu chez l'abonné mémorisé.

2. Procédé suivant la revendication 1, caractérisé par le fait que le paramètre d'autorisation est combiné à l'ancien nombre aléatoire par l'intermédiaire d'un circuit OU-Exclusif (XOR).
